**Europäisches Patentamt**

**European Patent Office**

**Office européen des brevets**

(19)

(11) Veröffentlichungsnummer: **0 125 430**

**A2**

(12) # EUROPÄISCHE PATENTANMELDUNG

(21) Anmeldenummer: **84102999.4**

(22) Anmeldetag: **19.03.84**

(51) Int. Cl.³: **C 02 F 3/10**

(30) Priorität: **16.05.83 DE 3317697**

(43) Veröffentlichungstag der Anmeldung:
**21.11.84 Patentblatt 84/47**

(84) Benannte Vertragsstaaten:
**AT BE CH FR GB IT LI LU NL SE**

(71) Anmelder: **GRABOWSKI Tropfkörper-Technik GmbH
Siemensstrasse 4
D-6352 Ober-Mörlen(DE)**

(72) Erfinder: **Grabowski, Gunther
Weidigstrasse 33
D-6306 Langgöns-Oberkleen(DE)**

(54) **Füllmaterial aus Kunststoff für Tropfkörper.**

(57) Bei der biologischen Abwasserreinigung in Tropfkörpern sind an die Füllung sehr unterschiedliche Kriterien gestellt wie Kontaktzeit und- häufigkeit des Abwassers mit den auf den Füllkörperflächen angesiedelten Mikroorganismen, Benetzungsgrad und Schlammaustrag bzw. Verstopfungsanfälligkeit. Ebenso müssen jedoch Materialkosten, Verarbeitungsaufwand und Einbaubedingungen berücksichtigt werden.

Die Erfindung erfüllt weitestgehend die verfahrenstechnischen Anforderungen und schließt gleichzeitig eine günstige Herstellungsweise ein. Sie beruht auf der Anordnung einer Vielzahl von senkrecht nebeneinandergestellten Rohrabschnitten gleicher Länge, wobei jedes Rohr mehrere keilförmige Einbuchtungen, die jeweils bis zur Rohrmitte reichen, aufweist. Diese Einbuchtungen sind wechselweise gegenüberliegend und höhenversetzt angeordnet.

Durch diese besondere Formgebung der Rohre, die zudem mit einer profilierten Mantelfläche versehen sein können, sind die möglichen Fallstrekken für Abwassertropfen sehr klein und der Zwangskontakt mit der Rohrwandung fortlaufend gegeben.

Die Eigenstabilität der Rohre sowie die kanalisierte Ableitung des Abwasser-Schlamm-Gemisches sind weitere Einsatzvorteile. Für die leichtere Handhabung und den geordneten Einbau werden gleichgroße Rohrbündel oder Rohrpakete durch entsprechende Verarbeitung gebildet.

GRABOWSKI Tropfkörper-Technik GmbH -1-      0125430

Siemensstraße 4

D 6352 Ober-Mörlen


Füllmaterial aus Kunststoff für Tropfkörper

BESCHREIBUNG

Die Erfindung betrifft ein Füllmaterial aus Kunststoff für Tropfkörper, bestehend aus einer Vielzahl von nebeneinander angeordneten, senkrecht stehenden, zylindrischen Hohlkörpern.

Ein derartiges Füllmaterial ist aus der Zeitschrift "Wasserwirtschaft" 1980, Nr. 12, S. 430, bekanntgeworden. Bei einer solchen Ausbildung des Füllmaterials besteht die Gefahr, daß das Abwasser über weite Strecken frei nach unten fallen bzw. ungehindert und sehr rasch an den Kanalwänden abfließen kann.

Der Erfindung liegt daher die Aufgabe zugrunde, ein gattungsmäßiges Füllmaterial ohne komplizierte Fertigungstechnik so auszubilden, daß ein freies Hindurchfallen von Abwassertropfen bzw. ein zu rasches Abfließen von Abwasser entlang der Zylinderwände verhindert ist.

Diese Aufgabe wird dadurch gelöst, daß die Zylinderwand keilförmige Einbuchtungen aufweist.

Ein gemäß der Erfindung hergestelltes Füllmaterial für Tropfkörper erfüllt trotz ihres einfachen Aufbaues alle im praktischen Betrieb an derartige Einrichtungen gestellte Anforderungen, indem es durch die vertikal ausgerichteten, allseits geschlossenen Kanäle das Abwasser in einer Zwangsführung nach unten ableitet. Ein freies Hindurchfallen von Abwassertropfen ist durch die von zwei gegenüberliegenden Seiten aus bis zur Rohrmitte reichenden keilförmigen Einbuchtungen ausgeschlossen, so daß die größte theoretische Fallhöhe eines Tropfens dem Abstand zwischen zwei Einbuchtungen einer Seite entspricht.

Füllmaterial aus Kunststoff für Tropfkörper

BESCHREIBUNG - Fortsetzung

Ein besonderer Vorteil der Erfindung ist darin zu sehen, daß durch die
Verwendung rechtwinklig abgeschnittener Rohrstücke jedes dieser Einzelelemente bereits über ein Eigenstandsvermögen verfügt, d.h. die Festigkeit und Stapelfähigkeit der Füllung ist nicht erst das Ergebnis einer
aufwendigen Verbindungstechnik, ggf. unter Einsatz umweltkritischer Lösungsmittelkleber.

Zweckmäßige Ausführungsformen des erfindungsgemäßen Füllmaterials sind
Gegenstand der Ansprüche 2 und 3.

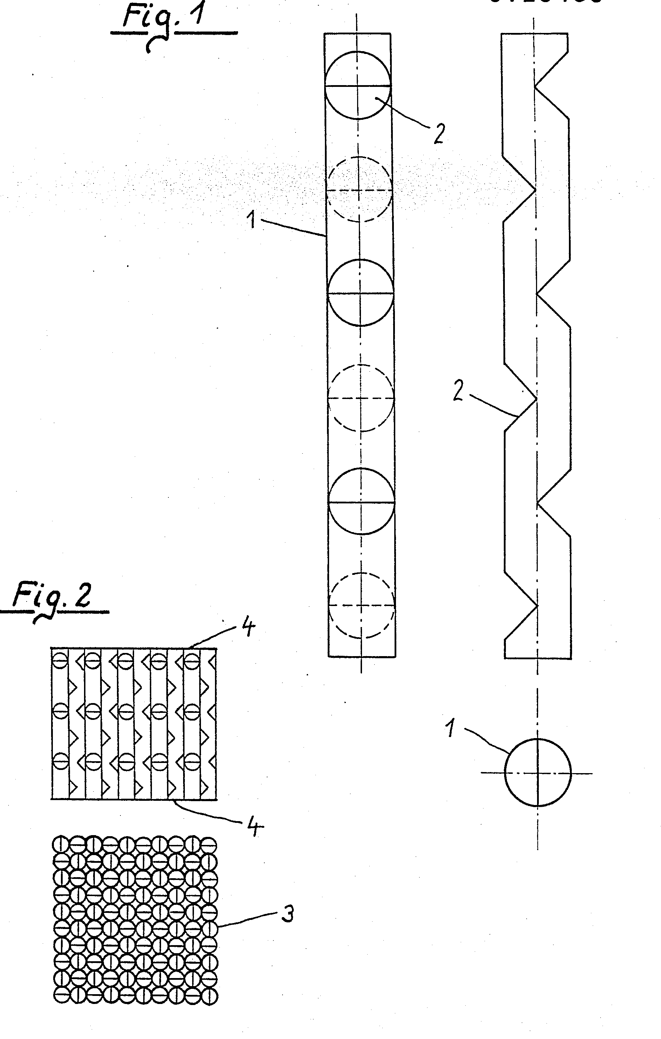

Die Erfindung wird nun anhand eines Ausführungsbeispiels in der Zeichnung erläutert. F i g. 1 zeigt einen einzelnen zylindrischen Hohlkörper 1
mit gegenüberliegenden und zueinander höhenversetzten Einbuchtungen 2 in
der glatten Zylinderwand in drei Ansichten. Bei der beispielhaft in verkleinertem Maßstab dargestellten Ausführung beläuft sich das Verhältnis
von Rohrlänge zu Rohrdurchmesser auf ungefähr 10 : 1, wodurch sich eine
vorteilhafte Anordnung von jeweils drei Einbuchtungen 2 auf jeder Seite
ergibt.

Ein einbaufertiges Rohrpaket 3 ist in verkleinertem Maßstab in F i g. 2
in Vorderansicht und Draufsicht dargestellt. Die Stirnkanten 4 der nebeneinander gestellten und sich berührenden Hohlkörper 1 sind durch Wärmestauchung punktförmig miteinander verschweißt. Die dabei entstehende wulstartige Verbreiterung der Stirnkanten 4 begünstigt die Lastübertragung bei der
Stapelung der Rohrpakte im Tropfkörper.

GRABOWSKI Tropfkörper-Technik GmbH

Siemensstraße 4

D 6352 Ober-Mörlen

Füllmaterial aus Kunststoff für Tropfkörper

Patentansprüche:

1. Füllmaterial aus Kunststoff für Tropfkörper, bestehend aus einer Vielzahl von nebeneinander angeordneten, senkrecht stehenden, zylindrischen Hohlkörpern, dadurch gekennzeichnet, daß die Zylinderwand keilförmige Einbuchtungen aufweist.

2. Füllmaterial nach Anspruch 1, dadurch gekennzeichnet, daß die Vorderkanten der keilförmigen Einbuchtungen jeweils bis zur Zylinderlängsachse reichen und senkrecht hierzu verlaufen und daß die Einbuchtungen entlang zweier diametral gegenüberliegender Zylindermantellinien angeordnet sind, wobei die Einbuchtungen entlang der einen Mantellinie um den halben lotrechten Abstand der Einbuchtungen entlang der gegenüberliegenden Mantellinie höhenversetzt sind.

3. Füllmaterial nach Anspruch 1 oder 2, dadurch gekennzeichnet, daß die Zylinderwand im Horizontalschnitt als Zick-Zack-Linie, sinusartige Wellung oder trapezförmige Profilierung ausgebildet ist.

0125430

## Fig.1

## Fig.2